# EUROPEAN PATENT SPECIFICATION

(11) **EP 4 141 281 B1**
(45) Date of publication and mention of the grant of the patent: **04.12.2024**
(21) Application number: 21192934.4
(22) Date of filing: 24.08.2021
(51) Int. Cl.: F16C 33/76, F16C 33/74, F16C 17/22, F16C 19/52, F16C 32/06, F16C 33/72, F16C 37/00

(54) **DEVICE WITH CONTACTLESS HEAT TRANSFER**
GERÄT MIT KONTAKTLOSER HITZEÜBERTRAGUNG
APPAREIL AVEC UN TRANSFERT DE CHALEUR SANS CONTACT

(43) Date of publication of application: 01.03.2023
(73) Proprietor: MI-Partners BV, 5507 TB Veldhoven (NL)
(72) Inventor: SPRUIT, Cornelius Nicolaas Jozef, 5502 CA Veldhoven (NL); RUIJL, Theo Anjes Maria, 5688 LB Oirschot (NL); PETERS, Petrus Johannes, 5731 EN Mierlo (NL)
(74) Representative: Verhees, Godefridus Josephus Maria

(56) References cited:
- EP-A1- 3 096 049
- US-A1- 2007 157 749

## Description

### Technical field of the invention

The invention relates to a provided with a housing and therein a movable unit, which is mounted in the housing by means of bearings and with a part of it protruding from the housing, wherein the inner side of the housing and the outer side of the movable unit are not in contact with each other, and there is a space between the inner side of the housing and the outer side of the movable unit which space is filled with gas, the pressure of the gas in the space between the inner side of the housing and the outer side of the movable unit is higher than the ambient pressure, and the space is separated from the environment outside the housing by means of a restriction between the inner side of the housing and the outer site of the movable unit, which restriction is formed by two facing restriction surfaces of the inner side of the housing and the outer side of the movable unit, which restriction surfaces are at a smaller distance from each other than the distance between the inner side of the housing and the outer side of the movable unit at a location other than at the location of the restriction and are spaced less than 0.1 mm from each other.

### Background of the invention

Such a device is known from EP 3 096 049 A1. The restriction surfaces are spaced at a minimum distance (typically less than 0.1 mm) from each other in order to achieve the desired gas pressure in the space with minimal leakage to the environment. Because the restriction surfaces are located at such a small distance from each other, not only an adequate seal is obtained which prevents excessive gas from leaking out, but also the heat transfer between the movable unit and the housing is improved.

### Summary of the invention

An object of the invention is to provide a device of the type described in the preamble, in which heat developed in the movable unit is dissipated better than in the known device. To this end, the device according to the invention is characterized in that the restriction surfaces are configured such that a plane parallel to the two restriction surfaces and midway between the two restriction surfaces passes through a thermal center of the housing and the movable unit, which thermal center, seen in cross-section of the device, is at the intersection of lines extending through the centers of the rotation bodies of the bearings and being perpendicular to stiffness lines, which stiffness lines extend through the center of the contact surfaces between bearing cages and rotation bodies of the bearings. At thermal expansion of the housing and the movable unit the distance between the restriction surfaces remains the same. The plane parallel to the two restriction surfaces and centrally between the two restriction surfaces passes through a thermal center of the housing and the movable unit. The thermal center is a point/location where, upon thermal expansion of the housing and movable unit, the housing and the movable unit do not move relative to each other.

Due to the pressurized gas in the space between the housing and the movable unit, better heat transfer occurs than if a lower pressure gas or no gas is present in the space. In this way a good heat transfer can still take place without contact between the housing and the movable unit. Because there is no contact between the housing and the movable unit, no wear occurs, so that the service life is not limited and no wear particles are released that can lead to extra resistance or contamination of the bearings.

For good heat transfer, it is desirable that the distance between the movable unit and the housing is small. For this reason, the space between the inner side of the housing and the outer side of the movable unit is preferably at least partly in the form of a slit. At this slit, the inner side of the housing and the outer side of the movable unit are preferably separated by a minimum distance (typically less than 1 mm).

Preferably, the gas in the space is a non-reactive gas with a relatively high thermal conductivity coefficient, such as a noble gas, for example helium.

Heat development often occurs in a device in which the movable unit is rotatably mounted in the housing and in which a shaft protrudes from the housing, so that the invention is particularly advantageous for such devices.

### Brief description of the drawings

The invention will be further elucidated below on the basis of drawings in which an embodiment of the device according to the invention is shown. Hereby is:

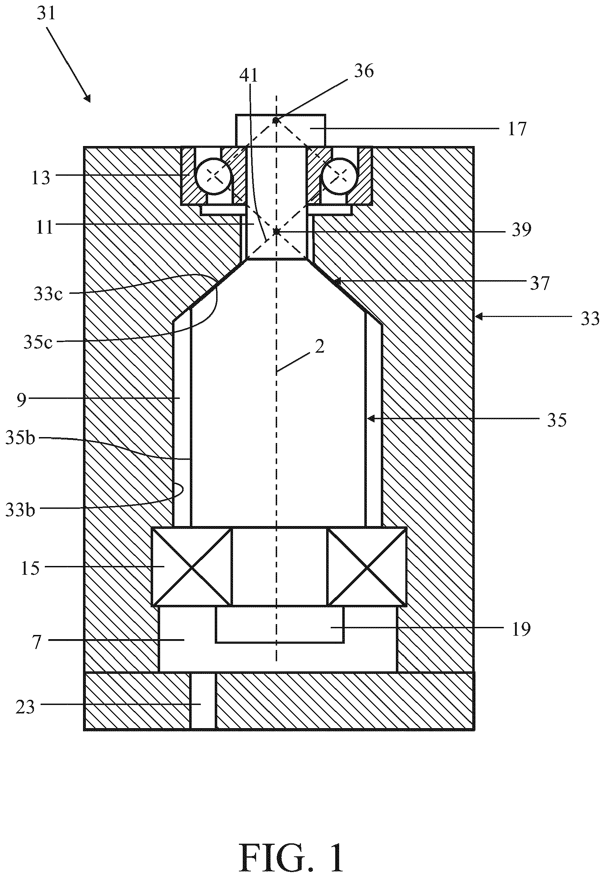

Figure 1 a cross-section of an embodiment of the device according to the invention.

### Detailed description of the drawings

Figure 1 shows a cross-section of an embodiment of the device according to the invention. This device 31 is provided with a housing 33 and a rotatable unit 35 present therein, which is mounted in the housing by means of bearings 13 and 15 and which projects from the housing with a shaft 11. The inside 3b of the housing and the outside 5b of the movable unit are not in contact with each other. Between the inside 33b of the housing and the outside 35b of the movable unit there is a space 7 which is partly formed by a slit 9 and which is filled with gas having a pressure higher than the ambient pressure.

The space 7 is separated from the environment outside the housing 33 by means of a restriction 39 between the inside of the housing and the outside of the movable unit. The major part of this space 7 is formed by a slit 9 between the inside of the housing and the outside of the movable unit. The restriction 39 is formed by two facing restriction surfaces 33c and 35c of the inside of the housing and the outside of the movable unit. In this embodiment the restriction surfaces 33c and 35c are at an angle to the axis 2 of the device.

These restriction surfaces 33c and 35c are at a smaller distance from each other than the distance between the inner side 33b of the housing and the outer side 35b of the movable unit at a different location than at the location of the restriction. The restriction surfaces 33c and 35c are arranged on a distance of less than 0.1 mm from each other and at the location of the slit 9, the inner side 33b of the housing and the outer side 35b of the movable unit are spaced less than 1 mm from each other.

By increasing the gas pressure in the space, more heat is transferred from the movable unit to the housing via the gas. In order to maintain this higher gas pressure in this space without the moving unit coming into contact with the housing, which entails friction and thus undesirable heat development, a contactless restriction is provided between the unit and the housing. In the housing 33 a closable opening 23 is present in order to be able to introduce the gas into the space 7.

The bearings 13 and 15 are suspended in the housing 33 and/or arranged on movable unit 35 (e.g. elastic) and/or designed in such a way that a difference in expansion of housing 33 relative to movable unit 35 can be accommodated without impermissible forces arise.

The restriction surfaces 33c and 35c are formed such that upon thermal expansion of the housing 33 and the rotatable unit 35 the distance between the restriction surfaces remains the same. To this end, a plane 41 parallel to the two restriction surfaces 33c and 35c and midway between the two restriction surfaces passes through a thermal center 39 of the housing 33 and the movable unit 35. This prevents the distance between the restriction surfaces from changing as a result of expansion of the movable unit and the housing when heat is generated, so that the seal decreases or the friction increases. The position of the thermal center 39 is determined by the construction of the bearings 13. The stiffness point 36 of the bearings is determined by the contact angle of the bearing which is determined by the intersection of stiffness lines through the center of the contact surfaces between bearing cages and rotation bodies. Lines through the centers of the rotation bodies and perpendicular to the stiffness lines intersect at the thermal center 39.

Although the invention has been elucidated in the foregoing with reference to the drawing, it should be noted that the invention is by no means limited to the embodiment shown in the drawing. The invention also extends to all embodiments deviating from the embodiment shown in the drawing within the framework defined by the claims. For example, instead of the contactless restriction shown in the drawing, a seal can be used in which contact is present between the sealing parts, such as for instance a sealing ring in which it is ensured that the parts in contact with each other are formed from materials with tribologically optimal properties relative to each other.

## Claims

1. Device (31) provided with a housing (33) and therein a movable unit (35), which is mounted in the housing by means of angular contact rolling bearings (13, 15) and with a part (11) of it protruding from the housing, wherein the inner side (33b) of the housing and the outer side (35b) of the movable unit are not in contact with each other, and there is a space (7) between the inner side of the housing and the outer side of the movable unit which space (7) is filled with gas, the pressure of the gas in the space (7) between the inner side (33b) of the housing (33) and the outer side (35b) of the movable unit (35) is higher than the ambient pressure, and the space (7) is separated from the environment outside the housing (33) by means of a restriction (37) between the inner side of the housing and the outer site of the movable unit, which restriction is formed by two facing restriction surfaces (33c, 35c) of the inner side of the housing and the outer side of the movable unit, which restriction surfaces (33c, 35c) are at a smaller distance from each other than the distance between the inner side (33b) of the housing and the outer side (35b) of the movable unit at a location other than at the location of the restriction (37), and are spaced less than 0.1 mm from each other, **characterized in that** the restriction surfaces (33c, 35c) are at an angle to the axis 2 of the device and configured such that a plane (41) parallel to the two restriction surfaces (33c, 35c) and midway between the two restriction surfaces (33c, 35c) passes through a thermal center (39) of the housing (33) and the movable unit (35) which thermal center (39), seen in cross-section of the device (31), is at the intersection of lines extending through the centers of the rotation bodies of the bearings (13, 15) and being perpendicular to stiffness lines, which stiffness lines extend through the center of the contact surfaces between bearing cages and rotation bodies of the bearings (13, 15).

2. Device according to claim 1, **characterized in that** the space (7) between the inner side (33b) of the housing and the outer side (35b) of the movable unit is at least partly in the form of a slit (9).

3. Device according to claim 2, **characterized in that** at the location of the slit (9) the inner side (33b) of the housing and the outer side (35b) of the movable unit are at a distance of less than 1 mm separated from each other.

4. Device according to any one of the preceding claims, **characterized in that** the gas present in the space (7) is a rare gas.

5. Device according to any one of the preceding claims, **characterized in that** the movable unit (35) is rotatably mounted in the housing (33) and a shaft (11) of it projects out of the housing.

## Patentansprüche

1. Vorrichtung (31) mit einem Gehäuse (33) und einer darin angeordneten beweglichen Einheit (35), die mittels Schrägwälzlagern (13, 15) im Gehäuse gelagert ist und mit einem Teil (11) aus dem Gehäuse herausragt, wobei die Innenseite (33b) des Gehäuses und die Außenseite (35b) der beweglichen Einheit nicht miteinander in Kontakt stehen und zwischen der Innenseite des Gehäuses und der Außenseite der beweglichen Einheit ein Raum (7) besteht, der mit Gas gefüllt ist, wobei der Druck des Gases im Raum (7) zwischen der Innenseite (33b) des Gehäuses (33) und der Außenseite (35b) der beweglichen Einheit (35) höher ist als der Umgebungsdruck, und wobei der Raum (7) von der Umgebung außerhalb des Gehäuses (33) mittels einer Verengung (37) zwischen der Innenseite des Gehäuses und der Außenseite der beweglichen Einheit getrennt ist, die durch zwei einander gegenüberliegende Verengungsflächen (33c, 35c) der Innenseite des Gehäuses und der Außenseite der beweglichen Einheit gebildet ist, wobei diese Begrenzungsflächen (33c, 35c) einen geringeren Abstand voneinander aufweisen als der Abstand zwischen der Innenseite (33b) des Gehäuses und der Außenseite (35b) der beweglichen Einheit an einer anderen Stelle als der Stelle der Verengung (37) und weniger als 0,1 mm voneinander beabstandet sind, **dadurch gekennzeichnet, dass** die Verengungsflächen (33c, 35c) in einem Winkel zur Achse (2) der Vorrichtung angeordnet sind und so konfiguriert sind, dass eine Ebene (41), die parallel zu den beiden Verengungsflächen (33c, 35c) und in der Mitte zwischen den beiden Verengungsflächen (33c, 35c) verläuft, durch ein thermisches Zentrum (39) des Gehäuses (33) und der beweglichen Einheit (35) verläuft, wobei dieses thermische Zentrum (39), im Querschnitt der Vorrichtung (31) gesehen, am Schnittpunkt von Linien liegt, die durch die Mittelpunkte der Rotationskörper der Lager (13, 15) verlaufen und senkrecht zu Steifigkeitslinien, welche Steifigkeitslinien durch die Mitte der Kontaktflächen zwischen Lagerkäfigen und Rotationskörpern der Lager (13, 15) verlaufen.

2. Vorrichtung nach Anspruch 1, **dadurch gekennzeichnet, dass** der Raum (7) zwischen der Innenseite (33b) des Gehäuses und der Außenseite (35b) der beweglichen Einheit zumindest teilweise die Form eines Schlitzes (9) hat.

3. Vorrichtung nach Anspruch 2, **dadurch gekennzeichnet, dass** an der Stelle des Schlitzes (9) die Innenseite (33b) des Gehäuses und die Außenseite (35b) der beweglichen Einheit einen Abstand von weniger als 1 mm voneinander haben.

4. Vorrichtung nach einem der vorhergehenden Ansprüche, **dadurch gekennzeichnet, dass** das im Raum (7) vorhandene Gas ein Edelgas ist.

5. Vorrichtung nach einem der vorhergehenden Ansprüche, **dadurch gekennzeichnet, dass** die bewegliche Einheit (35) drehbar im Gehäuse (33) gelagert ist und eine Welle (11) davon aus dem Gehäuse herausragt.

## Revendications

1. Dispositif (31) pourvu d'un boîtier (33) et à l'intérieur de celui-ci d'une unité mobile (35), qui est montée dans le boîtier au moyen de roulements à contact angulaire (13, 15) et dont une partie (11) dépasse du boîtier, le côté intérieur (33b) du boîtier et le côté extérieur (35b) de l'unité mobile ne sont pas en contact l'un avec l'autre, et il existe un espace (7) entre le côté intérieur du boîtier et le côté extérieur de l'unité mobile, lequel espace (7) est rempli de gaz, la pression du gaz dans l'espace (7) entre le côté intérieur (33b) du boîtier (33) et le côté extérieur (35b) de l'unité mobile (35) est supérieure à la pression ambiante, et l'espace (7) est séparé de l'environnement extérieur du boîtier (33) au moyen d'une restriction (37) entre le côté intérieur du boîtier et le site extérieur de l'unité mobile, laquelle restriction est formée par deux surfaces de restriction opposées (33c, 35c) du côté intérieur du boîtier et du côté extérieur de l'unité mobile, lesquelles surfaces de restriction (33c, 35c) sont à une distance inférieure l'une de l'autre à la distance entre le côté intérieur (33b) du boîtier et le côté extérieur (35b) de l'unité mobile à un emplacement autre que l'emplacement de la restriction (37), et sont espacées de moins de 0,1 mm l'une de l'autre, **caractérisé en ce que** les surfaces de restriction (33c, 35c) sont à un angle par rapport à l'axe (2) du dispositif et sont configurées de telle sorte qu'un plan (41) parallèle aux deux surfaces de restriction (33c, 35c) et à mi-chemin entre les deux surfaces de restriction (33c, 35c) passe par un centre thermique (39) du boîtier (33) et de l'unité mobile (35), lequel centre thermique (39), vu en coupe transversale du dispositif (31), se trouve à l'intersection de lignes passant par les centres des corps de rotation des paliers (13, 15) et étant perpendiculaires à des lignes de rigidité, lesquelles lignes de rigidité s'étendent à travers le centre des surfaces de contact entre les cages de palier et les corps rotatifs des paliers (13, 15).

2. Dispositif selon la revendication 1, **caractérisé en ce que** l'espace (7) entre le côté intérieur (33b) du boîtier et le côté extérieur (35b) de l'unité mobile se présente au moins partiellement sous la forme d'une fente (9).

3. Dispositif selon la revendication 2, **caractérisé en ce qu'**à l'endroit de la fente (9), le côté intérieur (33b) du boîtier et le côté extérieur (35b) de l'unité mobile sont séparés l'un de l'autre par une distance inférieure à 1 mm.

4. Dispositif selon l'une quelconque des revendications précédentes, **caractérisé en ce que** le gaz présent dans l'espace (7) est un gaz rare.

5. Dispositif selon l'une quelconque des revendications précédentes, **caractérisé en ce que** l'unité mobile (35) est montée rotative dans le boîtier (33) et un arbre (11) de celle-ci fait saillie hors du boîtier.
